# FASCICULE DE BREVET EUROPEEN

(11) **EP 2 619 278 B1**
(45) Date de publication et mention de la délivrance du brevet: **19.12.2018**
(21) Numéro de dépôt: 11755399.0
(22) Date de dépôt: 04.08.2011
(51) Int. Cl.: C09K 5/04, C10M 171/00

(54) **COMPOSITION A BASE DE 3,3,3-TRIFLUOROPROPENE**
3,3,3-TRIFLUORPROPENZUSAMMENSETZUNG
3,3,3-TRIFLUOROPROPENE COMPOSITION

(30) Priorité: 20.09.2010 FR 1057484
(43) Date de publication de la demande: 31.07.2013
(73) Titulaire: Arkema France, 92700 Colombes (FR)
(72) Inventeur: BOUSSAND, Béatrice, F-69110 Sainte Foy Les Lyon (FR)
(74) Mandataire: Chahine, Audrey Claire
(86) Numéro de dépôt international: PCT/FR2011/051870
(87) Numéro de publication internationale: WO 2012/038630

(56) Documents cités:
- WO-A1-2011/082003
- US-A1- 2006 243 944
- US-A1- 2009 241 562
- US-A1- 2010 108 936
- US-A1- 2010 133 463

## Description

La présente invention concerne l'utilisation d'une composition renfermant du 3,3,3-trifluoropropène et au moins un lubrifiant, apte à être utilisée dans la réfrigération, climatisation et pompe à chaleur.

Les problèmes posés par les substances appauvrissant la couche d'ozone atmosphérique ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la climatisation a beaucoup investi dans la substitution de ces fluides frigorigènes et c'est ainsi que les hydrofluorocarbures (HFC) ont été commercialisés.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1430) est considéré comme ayant un pouvoir de réchauffement élevé. La contribution à l'effet de serre d'un fluide est quantifiée par un critère, le GWP (Global Warming Potential) qui résume le pouvoir de réchauffement en prenant une valeur de référence de 1 pour le dioxyde de carbone.

Les hydrofluorooléfines (HFO) ont un pouvoir de réchauffement peu élevé et donc répondent aux objectifs fixés par le protocole de Kyoto. Le document JP 4-110388 divulgue les hydrofluoropropènes comme agent de transfert de chaleur. US 2006/243944 décrit des compositions à base de 3,3,3-trifluoropropène (1243zf).

Dans le domaine industriel, les machines frigorifiques les plus employées sont basées sur le refroidissement par évaporation d'un fluide frigorigène liquide. Après vaporisation, le fluide est compressé puis refroidi afin de repasser à l'état liquide et poursuivre ainsi le cycle.

Les compresseurs frigorifiques utilisés sont de type alternatifs, centrifuge, scroll ou à vis. En général, la lubrification interne des compresseurs est indispensable pour réduire l'usure et l'échauffement des organes en mouvement, parfaire leur étanchéité et les protéger contre la corrosion.

Outre les bonnes propriétés d'agent de transfert de chaleur, pour qu'un fluide frigorigène soit accepté commercialement il doit notamment présenter une stabilité thermique et une compatibilité avec les lubrifiants. En effet, il est hautement souhaitable que le fluide frigorigène soit compatible avec le lubrifiant utilisé dans le compresseur, présent dans la majorité des systèmes de réfrigération. Cette association fluide frigorigène et lubrifiant est importante pour la mise en oeuvre et l'efficacité du système de réfrigération, notamment le lubrifiant doit être suffisamment soluble ou miscible dans le fluide frigorigène dans tout l'intervalle de température de fonctionnement.

C'est ainsi que les polyalkylènes glycol (PAG) ont été mis au point comme lubrifiants du HFC-134a dans la climatisation automobile.

Des essais de compatibilité du 1,1,3,3,3-pentafluoropropène, du 1,3,3,3-tetrafluoropropène et du 3,3,3-trifluoropropène avec des PAG ont été décrits à l'exemple 3 du document WO 2004/037913. Ce document se contente de donner seulement l'apparence visuelle des échantillons après les essais.

US2009/041562 décrit une méthode pour choisir un lubrifiant et un réfrigérant pour utilisation dans un appareil de réfrigération. US2010/133463 décrit des compositions à base de lubrifiant et d'au moins un composé fluoré à titre de réfrigérant, tel que le HFO-1234yf.

La demanderesse a maintenant mis au point un couple fluide frigorigène et lubrifiant, apte à être utilisée en réfrigération, climatisation et pompe à chaleur. Ce couple présente l'avantage d'être particulièrement stable pour le lubrifiant et/ou le fluide frigorigène.

Il est décrit une composition comprenant au moins un lubrifiant à base d'esters de polyol (POE) ou de polyvinyléther (PVE) et un fluide frigorigène F comprenant du 3,3,3-trifluoropropène (HFO-1243zf).

La présente demande a pour objet l'utilisation d'une composition comprenant au moins un lubrifiant à base d'esters de polyol (POE) obtenus à partir de polyols ayant un squelette de néopentyle ou PVE étant un copolymère des deux motifs suivants 1 et 2 : 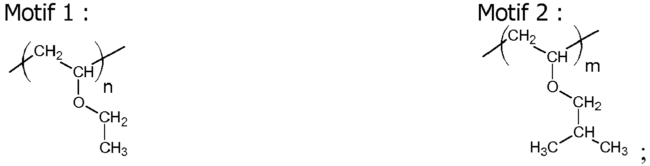 et un fluide frigorigène F comprenant du 3,3,3-trifluoropropène, en climatisation et pompe à chaleur.

Selon la présente invention, le fluide F peut comprendre, outre le HFO-1243zf, d'autres hydrofluoropropènes comme par exemple le 2,3,3,3-tetrafluoropropène (HFO-1234yf) et le trans-1,3,3,3-tetrafluoropropène.
Le fluide F peut également comprendre des hydrofluorocarbures tels que le 1,1,1,2-tetrafluororéthane, le 1,1-difluorométhane et le pentafluoroéthane.

Par rapport aux autres hydrofluoropropènes, le 3,3,3-trifluoropropène présente l'avantage d'être déjà un produit commercial.

Les esters de polyol sont obtenus par réaction d'un polyol (un alcool contenant au moins 2 groupements hydroxyles, -OH) avec un acide carboxylique monofonctionnel ou plurifonctionnel ou avec un mélange d'acides carboxyliques monofonctionnels. L'eau formée lors de cette réaction est éliminée pour éviter la réaction inverse (c-à-d l'hydrolyse).

Selon la présente invention, les polyols préférés sont ceux ayant un squelette de néopentyle comme le néopentyle glycol, le triméthylol propane, le pentaerythritol et le dipentaerythritol; le pentaerythritol est le polyol préféré.
Les acides carboxyliques peuvent comprendre de 2 à 15 atomes de carbone, le squelette carboné pouvant être linéaire ou ramifié. On peut citer notamment l'acide n-pentanoïque, l'acide n-hexanoïque, l'acide n-heptanoïque, l'acide n-octanoïque, l'acide 2-éthylhexanoïque, l'acide 2,2-diméthylpentanoïque, l'acide 3,5,5-trimethylhexanoïque, l'acide adipique, l'acide succinique et leurs mélanges.

Certaines fonctions alcool ne sont pas estérifiées, cependant leur proportion reste faible. Ainsi, les POE peuvent comprendre entre 0 et 5 % molaire relatif de motifs CH₂-OH par rapport aux motifs -CH₂-O-(C=O)-.

Les lubrifiants POE préférés sont ceux ayant une viscosité de 1 à 1000 centiStokes (cSt) à 40°C, de préférence de 10 à 200 cSt, et avantageusement de 30 à 80 cSt.

Les propriétés de l'huile PVE (viscosité, solubilité du fluide et miscibilité avec le fluide notamment) peuvent être ajustées en faisant varier le ratio m/n et la somme m+n des motifs 1 et 2. Les huiles PVE préférées sont celles ayant 50 à 95 % en poids de motif 1.

Selon un mode préféré de l'invention le lubrifiant représente(nt) entre 10 et 50 %, inclus, en poids de la composition. Le POE est particulièrement préféré.

Le fluide F peut également comprendre des additifs tels que les composés odorants.
La présente invention a également pour objet l'utilisation de la composition précitée dans la réfrigération, notamment la réfrigération domestique, commerciale, chambres froides, industrie alimentaire, procédé, transport frigorifique (camions, bateaux) ; la climatisation, notamment climatisation domestique, commerciale ou industrielle, où les équipements utilisés sont soit des chillers, soit des équipements à expansion directe ; et pompe à chaleur,notamment les pompes à chaleur moyenne et haute température.

### PARTIE EXPERIMENTALE

Les essais de stabilité thermique sont effectués selon la norme ASHRAE 97-2007: "sealed glass tube method to test the chemical stability of materials for use within refrigerant systems".
Les conditions de test sont les suivantes :
masse de fluide F: 2,2 g
masse de lubrifiant : 5 g
température : 200°C
durée : 14 jours

Le lubrifiant est introduit dans un tube en verre de 42,2 ml. Le tube est ensuite tiré sous vide puis le fluide F y est ajouté. Le tube est alors soudé pour le fermer et placé dans une étuve à 200°C pendant 14 jours.

En fin de test, différentes analyses sont réalisées :
- la phase gaz est récupérée pour être analysée par chromatographie phase gazeuse : les principales impuretés ont été identifiées par GC/MS (chromatographie phase gazeuse couplée spectrométrie de masse). On peut ainsi regrouper les impuretés venant du fluide F et celles venant du lubrifiant.
- le lubrifiant est analysé : couleur (par spectrocolorimétrie, Labomat DR Lange LICO220 Modèle MLG131), humidité (par coulométrie Karl Fischer, Mettler DL37) et indice d'acide (par dosage avec de la potasse méthanolique 0,01N).
3 lubrifiants commerciaux ont été testés : l'huile PAG ND8, l'huile POE Ze-GLES RB68 et PVE FVC 68D.

Le fluide F contient essentiellement du HFO-1243zf.

| | PAG ND8 | POE Ze-GLES RB68 | PVE FVC 68D |
|---|---|---|---|
| Fluide | HFO-1243zf | HFO-1243zf | HFO-1243zf |
| Sous-produits dans la phase gaz : | | | |
| 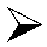 à partir du fluide | 1300 ppm | 500ppm | 0,7 % |
| 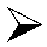 à partir du lubrifiant | 2% | 1100 ppm | 5% |
| Analyse du lubrifiant : | | | |
| 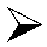 couleur | 6,5 Gardner | 100 Hazen | 6,2 Gardner |
| 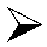 humidité | 1000 ppm | 400 ppm | 350 ppm |
| 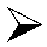 Indice d'acide | 3,7 mg KOH/g | 0,3 mg KOH/g | 0,5 mg KOH/g |

On constate que l'indice d'acidité est plus faible en présence du POE ou PVE . En outre, en présence du POE la stabilité du fluide est également améliorée.

## Revendications

1. Utilisation d'une composition comprenant au moins un lubrifiant à base d'esters de polyol (POE) obtenus à partir de polyols ayant un squelette de néopentyle ou PVE étant un copolymère des deux motifs suivants 1 et 2 : 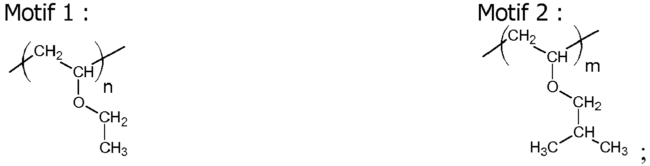 et un fluide frigorigène F comprenant du 3,3,3-trifluoropropène, en climatisation et pompe à chaleur.

2. Utilisation selon la revendication 1 **caractérisée en ce que** le fluide frigorigène F comprend en outre du 2,3,3,3-tetrafluoropropène et du trans-1,3,3,3-tetrafluoropropène.

3. Utilisation selon la revendication 1 à 2 **caractérisée en ce que** le squelette de néopentyle est le néopentyle glycol, le triméthylol propane, le pentaerythritol ou le dipentaerythritol.

4. Utilisation selon l'une quelconque des revendications 1 à 3 **caractérisée en ce que** les POE sont obtenus à partir d'acide carboxylique ayant de 2 à 15 atomes de carbone, linéaire ou ramifié.

5. Utilisation selon l'une quelconque des revendications 1 à 4 **caractérisée en ce que** le(s) POE représente(nt) entre 10 et 50 % en poids de la composition.

## Patentansprüche

1. Verwendung einer Zusammensetzung, umfassend mindestens ein Schmiermittel auf Basis von aus Polyolen mit einer Neopentyl-Hauptkette erhaltenen Polyolestern (POE) oder PVE, wobei es sich um ein Copolymer der folgenden zwei Einheiten 1 und 2 handelt: 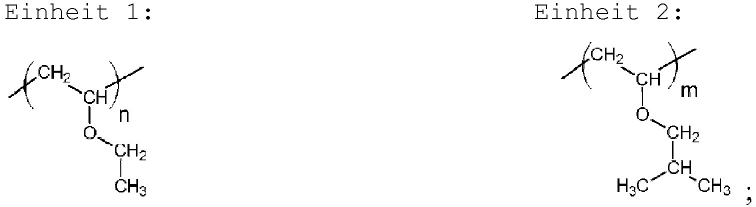 und ein Kältefluid F, das 3,3,3-Trifluorpropen umfasst, bei der Klimatisierung und in Wärmepumpen.

2. Verwendung nach Anspruch 1, **dadurch gekennzeichnet, dass** das Kältefluid F außerdem 2,3,3,3-Tetrafluorpropen und trans-1,3,3,3-Tetrafluor-propen umfasst.

3. Verwendung nach Anspruch 1 oder 2, **dadurch gekennzeichnet, dass** es sich bei der Neopentyl-Hauptkette um Neopentylglykol, Trimethylolpropan, Pentaerythritol oder Dipentaerythritol handelt.

4. Verwendung nach einem der Ansprüche 1 bis 3, **dadurch gekennzeichnet, dass** die POE aus einer linearen oder verzweigten Carbonsäure mit 2 bis 15 Kohlenstoffatomen erhalten werden.

5. Verwendung nach einem der Ansprüche 1 bis 4, **dadurch gekennzeichnet, dass** das bzw. die POE zwischen 10 und 50 Gew.-% der Zusammensetzung ausmacht bzw. ausmachen.

## Claims

1. Use of a composition comprising at least one lubricant based on polyol esters (POEs) obtained from polyols which have a neopentyl backbone or a backbone of PVE which is a copolymer of the following two units 1 and 2: 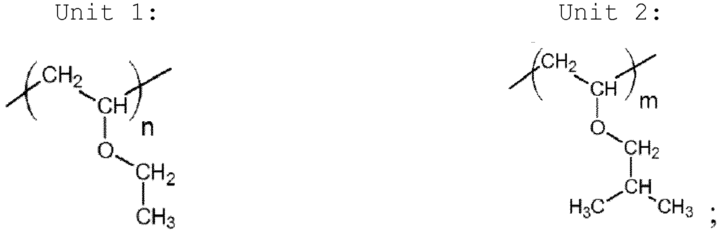 and a refrigerant F comprising 3,3,3-trifluoropropene, in air-conditioning and heat pumps.

2. Use according to Claim 1, **characterized in that** the refrigerant F also comprises 2,3,3,3-tetrafluoropropene and trans-1,3,3,3-tetrafluoropropene.

3. Use according to Claim 1 or 2, **characterized in that** the neopentyl backbone is neopentyl glycol, trimethylol propane, pentaerythritol or dipentaerythritol.

4. Use according to any one of Claims 1 to 3, **characterized in that** the POEs are obtained from linear or branched carboxylic acid having from 2 to 15 carbon atoms.

5. Use according to any one of Claims 1 to 4, **characterized in that** the POE(s) represent (s) between 10% and 50% by weight of the composition.
